# EUROPEAN PATENT APPLICATION

(11) **EP 3 480 573 A1**
(43) Date of publication of application: **08.05.2019**
(21) Application number: 18193367.2
(22) Date of filing: 10.09.2018
(51) Int. Cl.: G01K 1/14, G01K 1/18, G01K 7/22

(54) **THERMO SENSOR**

(30) Priority: 07.11.2017 CN 201721470734 U; 11.05.2018 CN 201820702669 U
(71) Applicant: Thinking Electronic Industrial Co., Ltd., Kaohsiung City (TW)
(72) Inventor: SUI, Chung-Hua, KAOHSIUNG CITY (TW)
(74) Representative: Melchior, Robin

(57) **Abstract**

A thermo sensor assembled to a unit under test (60) has a metal plate (10), a passive component (20), and a package (30). The metal plate (10) has an installation socket (11) and at least one cable tray (13). The installation socket (11) has a flat conducting base (111). The passive component (20) has a main body (21) mounted in the installation socket (11) and at least one cable (22) respectively mounted in the at least one cable tray (13) and electrically connected to both the main body (21) and the metal plate (10). The package (30) integrally encapsulates the metal plate (10) and the passive component (20). The conducting base (111) is revealed outside the package (30) and directly contacts the unit under test (60). Therefore, the passive component (20) has a rapid and precise response to heat, and the thermo sensor can get accurate readings.

## Description

### BACKGROUND OF THE INVENTION

### 1. Field of the Invention

The present invention relates to a passive component, and more particularly to a thermo sensor for measuring temperature.

### 2. Description of Related Art

Conventional thermo sensors such as thermistors with a ring lug have to be particularly designed according to various types of units under test, are not suitable for an automated production line, have to be installed manually, and are difficult to be completely attached to the units under test.

A current thermo sensor has a metal plate and a passive component. The metal plate has a socket and multiple grooves. The passive component has a body and multiple wires connected to the body. The body of the passive component is mounted in the socket of the metal plate. The multiple wires of the passive component are respectively mounted in the multiple grooves and are welded on the metal plate. The metal plate and the passive component are encapsulated by plastic. However, the current thermo sensor needs an aluminum belt to reach out from the plastic encapsulation for heat conduction. Therefore, the passive component of the current thermo sensor has a delay of response.

To overcome the shortcomings of the conventional and current thermo sensors, the present invention provides a thermo sensor to mitigate or obviate the aforementioned problems.

### SUMMARY OF THE INVENTION

The main objective of the present invention is to provide a thermo sensor that is able to rapidly and precisely measure temperature of a unit under test.

The thermo sensor assembled to a unit under test comprises a metal plate, a passive component, and a package. The metal plate has an installation socket and at least one cable tray. The installation socket has a flat conducting base. The passive component has a main body mounted in the installation socket and at least one cable respectively mounted in the at least one cable tray and electrically connected to both the main body and the metal plate. The package integrally encapsulates the metal plate and the passive component. The conducting base is revealed outside the package and directly contacts the unit under test. Therefore, the passive component has a rapid and precise response to heat, and the thermo sensor can be applied to various positions and can get accurate readings without being interfered by the external environment.

Other objects, advantages, and novel features of the invention will become more apparent from the following detailed description when taken in conjunction with the accompanying drawings.

### BRIEF DESCRIPTION OF THE DRAWINGS

Fig. 1 is a perspective view of a metal plate, a passive component, and a fastener of a thermo sensor in accordance with the present invention, showing the metal plate connected to a frame;
Fig. 2 is a perspective view of the thermo sensor in Fig. 1, showing the metal plate and the passive component encapsulated in a package and a fastener mounted to the package;
Fig. 3 is a perspective view of the thermo sensor in Fig.2;
Fig. 4 is a perspective view of the package of the thermo sensor in Fig. 3;
Fig. 5 is a perspective view of a unit under test for mounting the thermo sensor in Fig. 2;
Fig. 6 is a perspective view of the unit under test in Fig. 5, mounted by the thermo sensor in Fig. 2; and
Fig. 7 is a perspective view of the thermo sensor in Fig. 2, showing the metal plate being trimmed off from the frame.

### DETAILED DESCRIPTION OF THE PREFERRED EMBODIMENTS

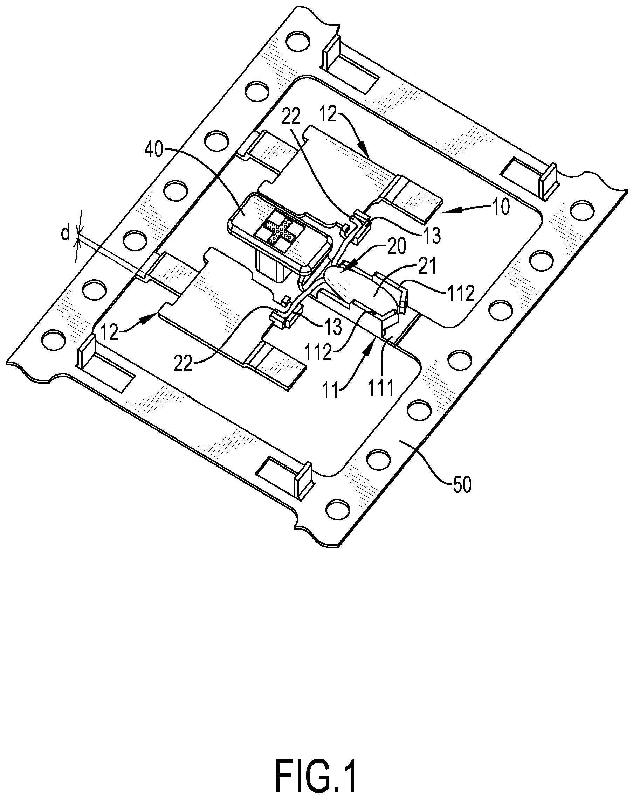

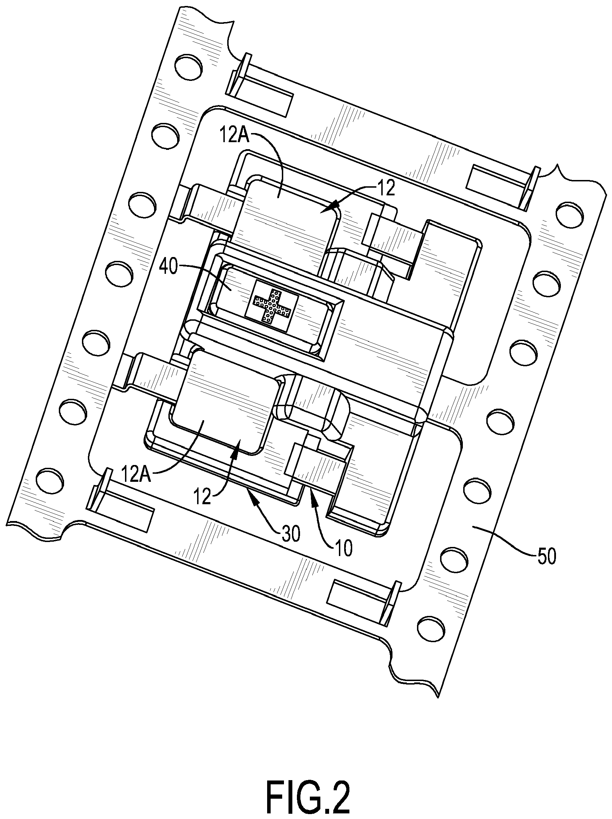

With reference to Figs. 1 and 2, a thermo sensor in accordance with the present invention has a metal plate 10, a passive component 20, a package 30, and a fastener 40. The metal plate 10 and the passive component 20 are encapsulated in the package 30. The fastener 40 is mounted to the package 30.

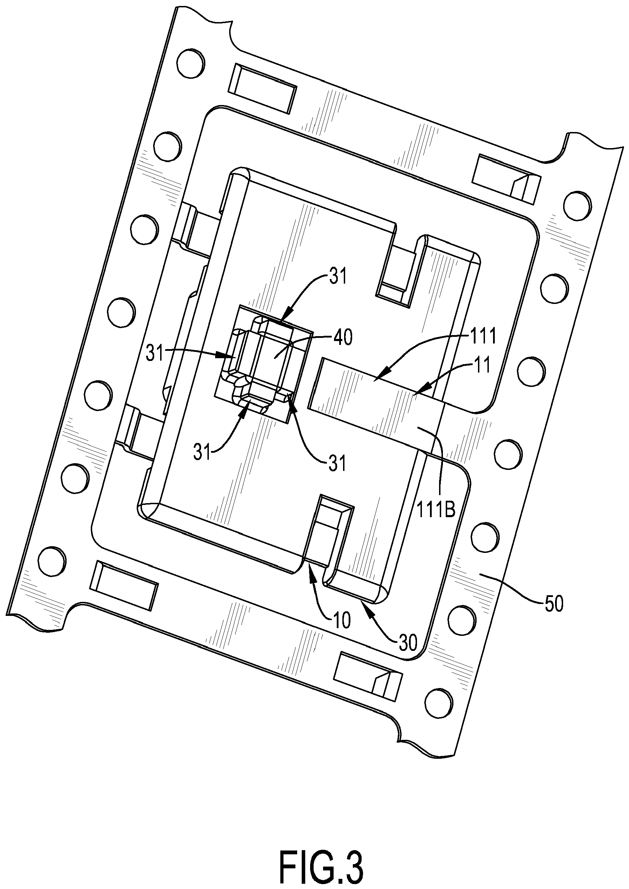

With reference to Fig. 1, the metal plate 10 is connected to a frame 50 and has an installation socket 11, two wiring portions 12, and two cable trays 13. On an automated production line, multiple said frames 50 are connected in sequence and each one of the multiple frames 50 is connected to a respective said metal plate 10. The installation socket 11, the two wiring portions 12, and the two cable trays 13 of the metal plate 10 are manufactured by stamping. The installation socket 11 has a conducting base 111 and two walls 112. The conducting base 111 is flat and is connected to the frame 50. The conducting base 111 has a bottom face 111B and a top face. With reference to Figs. 1 and 3, the bottom face 111B and the top face of the conducting base 111 face to opposite directions, respectively. The two walls 112 are erectly connected to the top face of the conducting base 111. The conducting base 111 and the two walls 112 are surrounded to form the installation socket 11.

With reference to Fig. 1, the two wiring portions 12 are connected to the frame 50 and designed for wire bonding. The two wiring portions 12 are disposed higher than the conducting base 111 in a longitudinal direction, that is, each one of the two wiring portions 12 and the conducting base 111 are separated by a longitudinal difference d. More specifically, the conducting base 111 is horizontally connected to the frame 50, the two wiring portions 12 are respectively connected to the frame 50 by one stair. With reference to Fig. 2, each one of the two wiring portions 12 has an upper face 12A. The upper face 12A of each one of the two wiring portions 12 and the bottom face 111B of the conducting base 111 face to opposite directions, respectively.

With reference to Fig. 1, the two cable trays 13 are respectively connected to the two wiring portions 12.

With reference to Fig. 1, the passive component 20 has a main body 21 and two cables 22. The main body 21 is mounted in the installation socket 11 and contacts the top face of the conducting base 111 of the installation socket 11. The two cables 22 are respectively mounted in the two cable trays 13 and are electrically connected to both the main body 21 and the two wiring portions 12. The passive component 20 may be a negative temperature coefficient (NTC) type thermistor or a positive temperature coefficient (PTC) type thermistor that differs from resistance temperature detectors (RTDs).

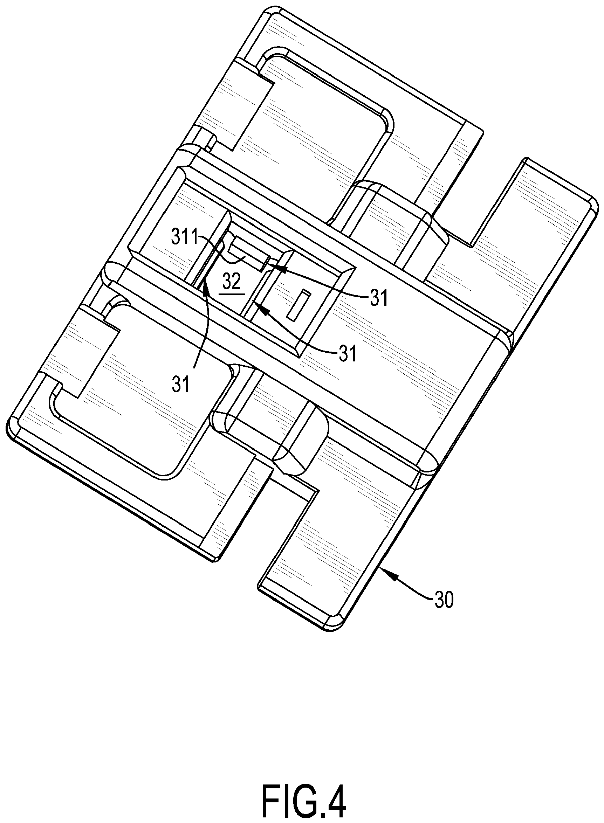

With reference to Figs. 2, 3, and 4, the package 30 integrally encapsulates the metal plate 10 and the passive component 20. And the bottom face 111B of the conducting base 111 of the installation socket 11 and the two upper faces 12A of the two wiring portions 12 are revealed outside the package 30. The package 30 has four abutting blocks 31 and a socket 32 surrounded by the four abutting blocks 31. Each one of the four abutting blocks 31 has an oblique face 311 inclining toward the socket 32. The oblique face 311 of each one of the four abutting blocks 31 and the upper face 12A of each one of the two wiring portions 12 face to a same direction.

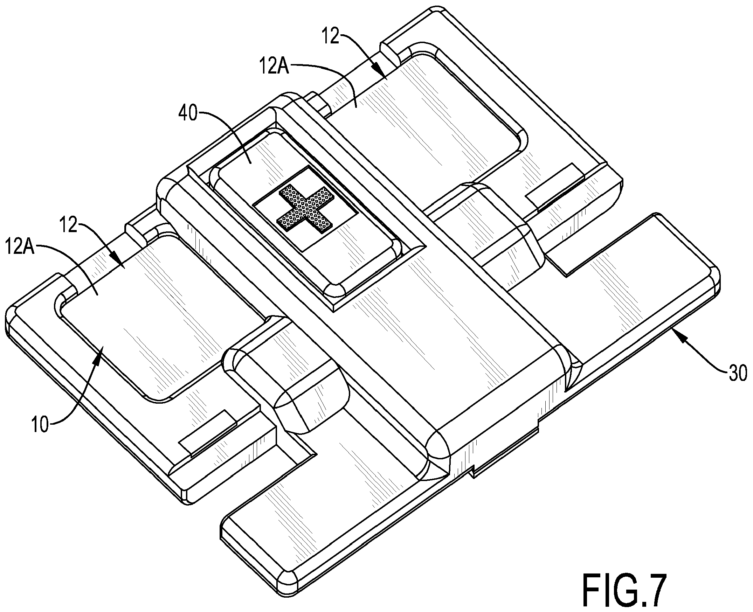

With reference to Fig 7, the metal plate 10 is trimmed off from the frame 50, and the installation socket 11 and the two wiring portions 12 are isolated by the package 30.

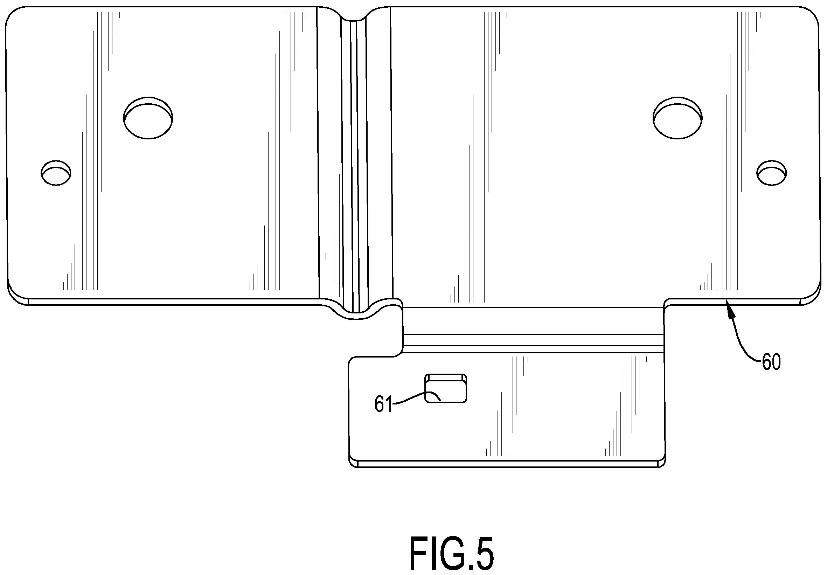

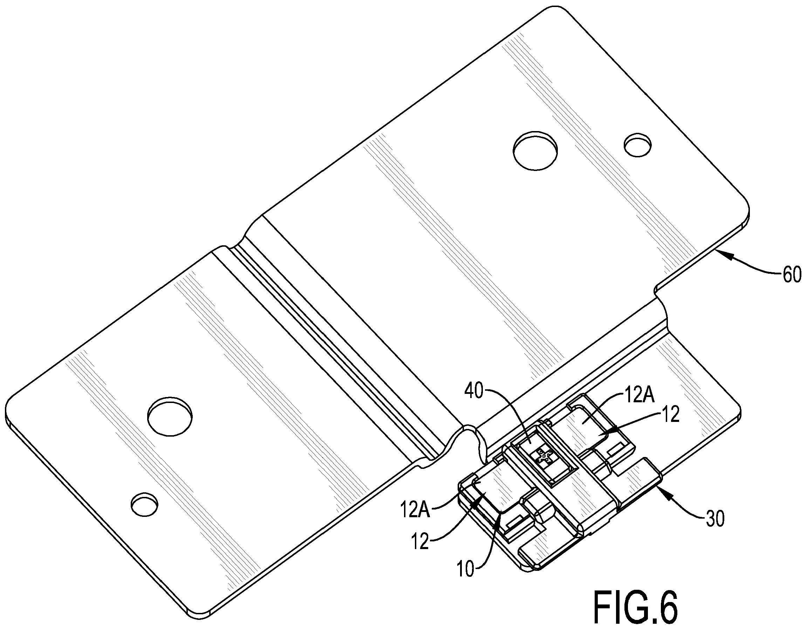

With reference to Figs. 5 and 6, the thermo sensor in accordance with the present invention is assembled to a unit under test 60. The unit under test 60 has a through hole 61. The through hole 61 is rectangular and has an edge. The four abutting blocks 31 of the package 30 are mounted into the through hole 61. The fastener 40 is made of plastic PA66+25%GF. The fastener 40 is mounted into the socket 32 of the package 30. The fastener 40 slides along the four oblique faces 311 of the four abutting blocks 31 to push the four abutting blocks 31 to abut against the edge of the through hole 61 of the unit under test 60 and make the thermo sensor in accordance with the present invention connect to the unit under test 60. The four abutting blocks 31 of the package 30 and the fastener 40 not only enhance solid and precise connection between the thermo sensor and the unit under test 60, but also facilitate assembly of the thermo sensor to a busbar. The thermo sensor in accordance with the present invention and the unit under test 60 may manufactured by different factories and may be connected to each other before shipment.

The bottom face 111B of the conducting base 111 of the installation socket 11 is revealed outside the package 30 and directly and completely contacts the unit under test 60. Therefore, the passive component 20 has a rapid response to heat and the thermo sensor in accordance with the present invention may be applied to various positions.

The conducting base 111 of the installation socket 11 is encapsulated in the package 30 except the bottom face 111B of the conducting base 111. Therefore, heat conducted from the unit under test 60 is difficult to dissipate from the conducting base 111, thereby making the passive component 20 able to respond precisely. And the thermo sensor in accordance with the present invention can get accurate readings of temperature without being interfered by the external environment.

The two upper faces 12A of the two wiring portions 12 revealed outside the package 30 can be readily bonded to external circuits for transferring signals.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A thermo sensor comprising:
a metal plate (10) having
an installation socket (11) having
a conducting base (111) being flat; and
at least one cable tray (13); and
a passive component (20) having
a main body (21) mounted in the installation socket (11); and
at least one cable (22) respectively mounted in the at least one cable tray (13) and electrically connected to both the main body (21) and the metal plate (10); and
a package (30) integrally encapsulating the metal plate (10) and the passive component (20);
wherein the conducting base (111) is revealed outside the package (30).

2. The thermo sensor as claimed in claim 1, wherein
a unit under test (60) has a through hole (61) having an edge;
the package (30) has
multiple abutting blocks (31); and
a socket (32) surrounded by the multiple abutting blocks (31); and
the multiple abutting blocks (31) are mounted into the through hole (61) and abut against the edge of the through hole (61) to connect the thermo sensor and the unit under test (60).

3. The thermo sensor as claimed in claim 2, wherein
the thermo sensor has a fastener (40) mounted in the socket (32) of the package (30) to push the multiple abutting blocks (31) to abut against the edge of the through hole (61) of the unit under test (60).

4. The thermo sensor as claimed in claim 3, wherein the fastener (40) is made of plastic PA66+25%GF.

5. The thermo sensor as claimed in claim 4, wherein
the metal plate (10) has at least one wiring portion (12) respectively connected to the at least one cable tray (13);
the at least one cable (22) of the passive component (20) is electrically and respectively connected to the at least one wiring portion (12) of the metal plate (10); and
the at least one wiring portion (12) and the installation socket (11) are isolated by the package (30).

6. The thermo sensor as claimed in claim 5, wherein
the at least one wiring portion (12) is disposed higher than the conducting base (111) of the installation socket (11) in a longitudinal direction; and
each one of the at least one wiring portion (12) and the conducting base (111) are separated by a longitudinal difference (d).

7. The thermo sensor as claimed in claim 6, wherein
each one of the at least one wiring portion (12) has an upper face (12A);
the conducting base (111) has a bottom face (111B); and
the upper face (12A) of each one of the at least one wiring portion (12) and the bottom face (111B) of the conducting base (111) face to opposite directions and are revealed outside the package (30).

8. The thermo sensor as claimed in claim 7, wherein
each one of the multiple abutting blocks (31) has an oblique face (311) inclining toward the socket (32); and
the oblique face (311) of each one of the multiple abutting blocks (31) and the upper face (12A) of each one of the at least one wiring portion (12) face to a same direction.

9. The thermo sensor as claimed in claim 8, wherein the metal plate (10) is manufactured by stamping and the at least one wiring portion (12) and the installation socket (11) are connected to a frame (50).

10. A thermo sensor comprising:
a metal plate (10) having
an installation socket (11) having
a conducting base (111) being flat; and
at least one cable tray (13); and
a passive component (20) having
a main body (21) mounted in the installation socket (11); and
at least one cable (22) respectively mounted in the at least one cable tray (13) and electrically connected to both the main body (21) and the metal plate (10); and
a package (30) integrally encapsulating the metal plate (10) and the passive component (20);
wherein the conducting base (111) is revealed outside the package (30) and directly contacts a unit under test (60).

11. The thermo sensor as claimed in claim 10, wherein
the metal plate (10) has at least one wiring portion (12) respectively connected to the at least one cable tray (13);
the at least one cable (22) of the passive component (20) is electrically and respectively connected to the at least one wiring portion (12) of the metal plate (10); and
the at least one wiring portion (12) and the installation socket (11) are isolated by the package (30).

12. The thermo sensor as claimed in claim 11, wherein
the at least one wiring portion (12) are disposed higher than the conducting base (111) of the installation socket (11) in a longitudinal direction; and
each one of the at least one wiring portion (12) and the conducting base (111) are separated by a longitudinal difference (d).

13. The thermo sensor as claimed in claim 12, wherein
each one of the at least one wiring portion (12) has an upper face (12A);
the conducting base (111) has a bottom face (111B); and
the upper face (12A) of each one of the at least one wiring portion (12) and the bottom face (111B) of the conducting base (111) face to opposite directions and are revealed outside the package (30).

14. The thermo sensor as claimed in claim 10, wherein
the unit under test (60) has a through hole (61) having an edge;
the package (30) has
multiple abutting blocks (31); and
a socket (32) surrounded by the multiple abutting blocks (31); and
the multiple abutting blocks (31) are mounted into the through hole (61) and abut against the edge of the through hole (61) to connect the thermo sensor and the unit under test (60);
the thermo sensor has a fastener (40) mounted in the socket (32) of the package (30) to push the multiple abutting blocks (31) to abut against the edge of the through hole (61) of the unit under test (60).

15. The thermo sensor as claimed in claim 11, wherein the metal plate (10) is manufactured by stamping and the at least one wiring portion (12) and the installation socket (11) are connected to a frame (50).
